# EUROPEAN PATENT SPECIFICATION

(11) **EP 3 694 726 B1**
(45) Date of publication and mention of the grant of the patent: **08.09.2021**
(21) Application number: 18782665.6
(22) Date of filing: 25.09.2018
(51) Int. Cl.: B42D 25/41, B42D 25/425

(54) **METHOD FOR FORMING A SHEET-LIKE SUBSTRATE**
VERFAHREN ZUM UMFORMEN EINES FLÄCHENFÖRMIGEN SUBSTRATS
PROCÉDÉ DE FORMATION D'UN SUBSTRAT DE TYPE FEUILLE

(30) Priority: 11.10.2017 CH 12422017
(43) Date of publication of application: 19.08.2020
(73) Proprietor: Dätwyler Schweiz AG, 6467 Schattdorf (CH)
(72) Inventor: DIEZ DIAZ, Maria Del Mar, 8807 Freienbach (CH); HABERLAND, Norbert, 53881 Euskirchen (DE); VRIJENS, Ronny, 3721 Vliermaalroot (BE)
(74) Representative: Prins Intellectual Property AG
(86) International application number: PCT/EP2018/075934
(87) International publication number: WO 2019/072544

(56) References cited:
- WO-A2-2007/075628
- DE-A1-102010 036 285
- US-B1- 9 390 363

## Description

### Technical Field

The invention refers to a method for forming a dimensionally stable three-dimensional shape into a sheet-like substrate of thermoplastic material.

### Prior Art

Thin plastic films with specific three-dimensional features may be used e.g. as control diaphragms for diaphragm carburettors. An example of such a diaphragm is described in WO2016012233 or Swiss patent application No. 00038/16. The diaphragm comprises a dimensionally stable three-dimensional shape in the form of a plurality of concentric corrugations.

Sheet-like substrates are typically processed by thermoforming manufacturing techniques such as vacuum or pressure thermoforming or mechanical thermoforming using a male and female die. However, vacuum or pressure thermoforming is only suitable for cup-like structures and very fine accurate structures on both sides of the sheet cannot be obtained. With mechanical thermoforming such as matched mould forming or hot embossing finer structures are obtainable. However, to accurately form plastic two-dimensional, planar sheets or films with less than 100 micrometre thickness into a dimensionally stable three-dimensional shape is hardly possible.

Furthermore, the thermoforming with matching moulds or hot embossing are costly and have long cycle-times due to long heating and cooling cycles of the mould, because the entire mould is preheated to a glass transition temperature or above of the thermoplastic material during each cycle. This is especially true for thermal processing of plastics with high glass transition temperatures.

A further problem of the known thermoforming techniques is that they are not suitable to manufacture diaphragms with structural features of different thicknesses e.g. a thickened central part which is up to several times thicker than the remaining area of the diaphragm.

Therefore, there is a need for a fast and highly accurate manufacturing method to form a dimensionally stable three-dimensional shape into a sheet-like substrate of thermoplastic material.

Document US 9,390,363 B1 discloses a method for forming a dimensionally stable three-dimensional shape into two sheet-like substrates of thermoplastic material comprising the steps of:
providing a mould including a first die with a first template surface for contacting an upper surface of one of the substrates and a second die with a second template surface for contacting a lower surface of the other of the substrates opposite the upper surface of the one of the substrates; each template surface having an inverse of a desired shape to be transformed to the upper and lower surfaces of the substrates;
placing the substrates between the first and second die of the mould and closing the mould; heating the thermoplastic substrates above its glass transition temperature during a sufficient time to transform the thermoplastic substrate into the three-dimensional shape.

### Summary of the invention

It is an objective of the invention to provide a fast and highly accurate manufacturing method to form a dimensionally stable three-dimensional shape into a sheet-like substrate of thermoplastic material.

This is achieved by the method according to claim 1 and by a device according to claim 9. The method for forming a dimensionally stable three-dimensional shape into a sheet-like substrate of thermoplastic material comprises the steps of: (a) providing a mould including a first die with a first template surface for contacting an upper surface of the sheet-like substrate and a second die with a second template surface for contacting a lower surface of the sheet-like substrate opposite the upper surface of the sheet-like substrate; each template surface having an inverse of a desired shape to be transformed to the upper and lower surfaces of the substrate; and at least one of the first die and the second die being transparent to electromagnetic waves of a predetermined wavelength; (b) providing at least one absorption layer being able to be heated by absorption of an electromagnetic irradiation of the predetermined wavelength and thereby heating the thermoplastic substrate to or above its glass transition temperature; (c) placing the substrate between the first and the second die of the mould and closing the mould; (d) irradiating the absorption layer with the electromagnetic irradiation in order to heat the thermoplastic substrate to or above its glass transition temperature during a sufficient time to transform the thermoplastic material into the three-dimensional shape.

The method thus allows to form planar sheet-like substrates into non-planar products with dimensionally stable shapes e.g. the diaphragms described in WO2016012233 or Swiss patent application No. 00038/16. The sheet-like substrate may be a sheet, a foil or a film of thermoplastic material. The sheet-like substrate suitable for the method may have a thickness preferably between 5 micrometre to 5 millimetre, preferably 8 to 500 micrometres. Thermoplastic materials may be selected from the group of polybenzimidazole (PBI), polyimide (PI), thermoplastic polyimide (TPI), polyamide imide (PAI), polyethersulfone (PES), polyphenylsulfone (PPSU), polyetherimide (PEI), polysulfone (PSU), polyether ketone (PEK), polyaryl ether ketone (PAEK), polyphenylene sulfide (PPS), perfluoroalkoxy polymer (PFA), ethylenetetrafluoroethylene (ETFE), polychlorotrifluoroethylene (PCTFE), polyvinylidene fluoride (PVDF), polybutylene terephthalate (PBT) or polyetheretherketone (PEEK).

The electromagnetic waves may be emitted from a pulsed source with a wavelength of 200 nm to 2000 nm.

The absorption layer may be a layer of metal provided over the first and/or second template surface. Typically the metal layer will be between a few tens and a few hundreds of nanometres thick. The irradiation source then emits a beam, which passes through the first and/or second die and is incident upon the metal layer. The layer of metal absorbs the beam, and rapidly becomes hot. The portion of the absorption layer, which is in contact with the upper and/or lower surface of the sheet-like substrate transfers heat to the sheet-like substrate, which heats up accordingly to or above its glass transition temperature and the sheet-like substrate is transformed to obtain a dimensionally stable three-dimensional shape.

In the case that more than one absorption layer is provided, the absorption layers may be of different material heatable by the same or by different irradiation wavelength.

With the described method two side moulding of sheet-like substrates is possible.

Preferred embodiments of the invention are set forth in the dependent claims.

In some embodiments at least one of the first template surface and the second template surface is provided with the absorption layer. In the case that both template surfaces are provided with an absorption layer two sources of irradiation may be used to irradiate both layers through their respective transparent die.

In some embodiments the sheet-like substrate is provided with the absorption layer. Such a layer may be coated onto the sheet-like substrate or may be the sheet-like substrate itself.

In some embodiments the sheet-like substrate may be transparent to electromagnetic waves of the predetermined wavelength.

In some embodiments the sheet-like substrate may comprise a material suitable to absorb the electromagnetic irradiation of predetermined wavelength in order to be heated to or above its glass transition temperature.

In some embodiments the sheet-like substrate may comprise at least two parts, preferably two layers. During step d, the at least two parts may be melted together.

In some embodiments the absorption layer may be provided only to regions where the sheet-like substrate is to be melted.

In some embodiments the surface of the sheet-like substrate may be provided with a release coating prior to step c, in order to facilitate demoulding. The release coating may be a hydrophobic coating. The coating may be a fluorinated coating e.g. a fluorinated ethylene propylene coating. The coating may be in the range of 10 nm.

The invention further refers to a device for forming a dimensionally stable three-dimensional shape into a sheet-like substrate of thermoplastic material, the device comprising: (a) a mould including a first die with a first template surface for contacting an upper surface of the substrate and a second die with a second template surface for contacting a lower surface of the substrate opposite the upper surface of the substrate; each template surface having an inverse of a desired shape to be transformed to the upper and lower surfaces of the substrate; and at least one of the first die and the second die being transparent to electromagnetic waves of a predetermined wavelength; and (b) a source of electromagnetic irradiation of the predetermined wavelength in order to heat an absorption layer arranged between the first template surface and the second template surface.

The source of electromagnetic waves may be a pulsed source with a wavelength of 200 nm to 2000 nm.

In some embodiments at least one of the first template surface and the second template surface may be provided with the absorption layer.

In some embodiments the absorption layer may be a single layer. The absorption layer may be a metallic layer, a graphite layer or a layer of heat absorbing paint.

### Brief Explanation of the Figures

The invention is described in greater detail below with reference to embodiments that are illustrated in the figures. The figures show:
- Fig. 1: a schematic representation of a method for forming a dimensionally stable three-dimensional shape into a sheet-like substrate of thermoplastic material;
- Fig. 2: a schematic representation of the mould during irradiation from one side;
- Fig. 3: a schematic representation of the mould during irradiation from both sides;
- Fig. 4: a schematic representation of the method with the absorption layer provided on the substrate;
- Fig. 5: a diaphragm manufacturable by the method of Fig. 1;
- Fig. 6: a schematic representation of a method for forming a dimensionally stable three-dimensional shape into a sheet-like substrate of thermoplastic material including bonding of two layers.

### Description of the Invention

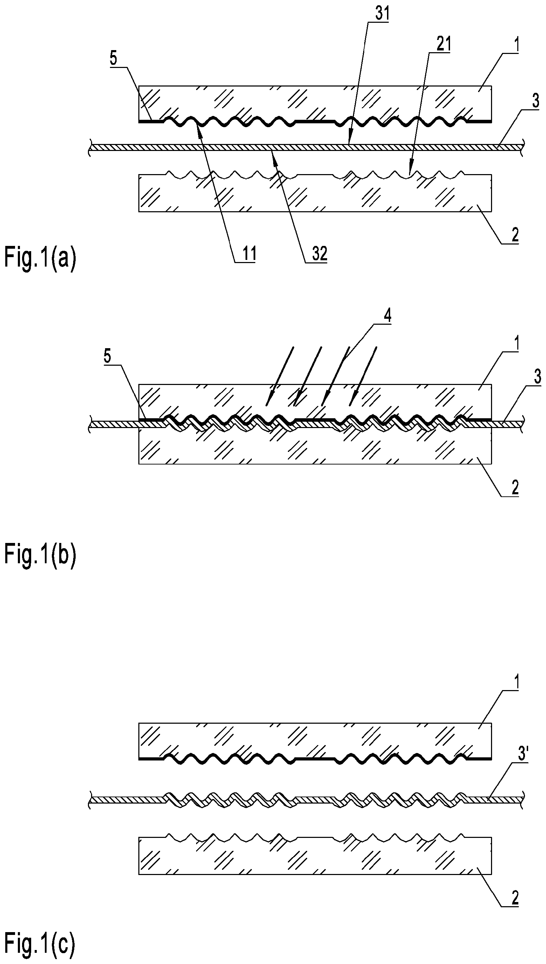

Fig. 1 shows a schematic representation of a method for forming a dimensionally stable three-dimensional shape into a sheet-like substrate 3 of thermoplastic material.

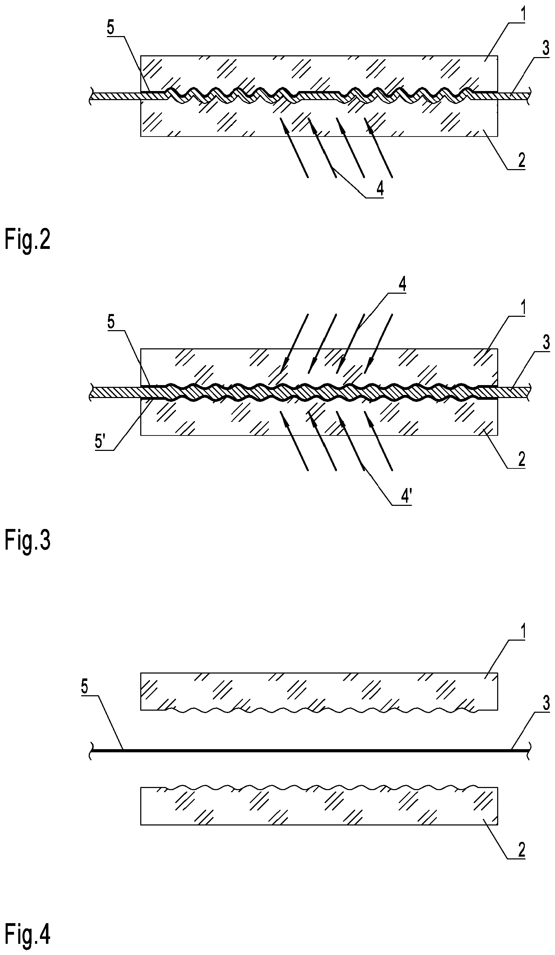

Fig. 1(a) shows an open mould with a first die 1 having a first template surface 11 and a second die 2 having a second template surface 21. The first template surface 11 having the inverse shape of the desired three-dimensional structure to be formed into an upper surface 31 of the sheet-like substrate 3. The second template surface 21 having the inverse shape of the desired three-dimensional structure to be formed into a lower surface 32 of the sheet-like substrate 3. The first and second template surfaces 11, 21 may have complementary shapes as shown in Fig. 1 and Fig. 2. However, non-complementary shapes are also possible as long as the thermoplastic material can be sufficiently displaced in its molten state, as shown in Fig. 3 and Fig. 4.

The sheet-like substrate 3 may be planar sheet, foil or film having a thickness in the range of 5 to 5000 micrometres, preferably 25 to 500 micrometres, and is placed between the first and the second die 1, 2. With respect to the present invention the sheet-like substrate before applying the method is two-dimensional. Afterwards it has a dimensionally stable three-dimensional shape e.g. with complementary corrugations to obtain e.g. a diaphragm with approximately the same overall thickness (Fig. 1(c)) or non-complementary corrugations (Fig. 3) to obtain e.g. a diaphragm with changing thickness.

Good results have been achieved so far with a 25 micrometer film of poly ether ether ketone (PEEK). However, thicker films and other materials, such as polybenzimidazole (PBI), polyimide (PI), thermoplastic polyimide (TPI), polyamide imide (PAI), polyethersulfone (PES), polyphenylsulfone (PPSU), polyetherimide (PEI), polysulfone (PSU), polyether ketone (PEK), polyaryl ether ketone (PAEK), polyphenylene sulfide (PPS), perfluoroalkoxy polymer (PFA), ethylenetetrafluoroethylene (ETFE), polychlorotrifluoroethylene (PCTFE), polyvinylidene fluoride (PVDF) or polybutylene terephthalate (PBT) may also be used.

In the method shown in Fig. 1 the first template surface 11 of the first die 1 is provided with an absorption layer 5. The absorption layer 5 can be quickly heated within milliseconds by electromagnetic irradiation 4 of a wavelength in the range of 200 to 2000 nm from a pulsed source. In order to irradiate the absorption layer 5, the first die 1 is of a material transparent to the wavelength of the electromagnetic irradiation 4.

After or during closure of the mould (Fig. 1(b)), the absorption layer 5 absorbs the irradiation 4 and is quickly heated up in order to transfer the energy to the thermoplastic sheet-like substrate 3. The substrate 3 is thereby heated until it is sufficiently hot, typically to or above its glass transition temperature, to be transformed into the desired three-dimensional shape. During the process the first and/or second die 1, 2 of the mould hardly heat up and almost immediately after stopping the irradiation 4 the mould can be opened and the transformed sheet-like substrate 3' can be removed (see Fig. 1(c)). The mould is then ready for the next cycle.

Alternatively to the embodiment shown in Fig. 1, the second die 2 and the sheet-like substrate 3 may be transparent to the irradiation. In this case the irradiation can pass through the second die 2 and the substrate 3 to the absorption layer 5 provided on the first die 1, as shown in Fig. 2.

In order to process thicker sheet-like substrates, both the first and the second template surfaces 11, 21 may each be provided with an absorption layer 5, 5'. In this case both the first and second die 1, 2 are transparent and the absorption layers 5, 5' are irradiated from opposite sides, as shown in Fig. 3.

Fig. 4 shows a variation of the method where the sheet-like substrate 3 itself is provided with an absorption layer 5 coated onto the substrate on one side or both sides or the substrate is of thermoplastic material that absorbs the irradiation. The first and/or the second die 1, 2 are transparent and the irradiation can be directed onto the substrate from one or both sides.

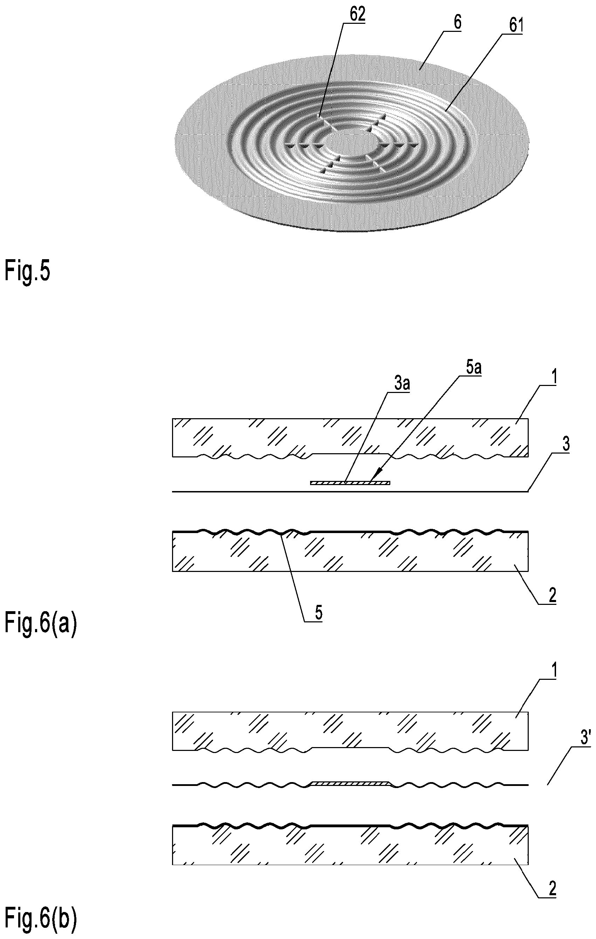

Fig. 5 shows an example of an article that may be manufactured with the method according to the invention. The article is a diaphragm 6 made of thermoplastic film material as it is described in WO2016012233. The diaphragm 6 in form of a disc comprises a plurality of concentric corrugations 61 and radial reinforcing ribs 62. Such a three-dimensional structure may be obtained by the methods described above. Good results have been achieved e.g. with a planar 25 micrometre thick PEEK film, into which a plurality of circular, concentric corrugations such as shown in the diaphragm of Fig. 5 have been formed.

As shown in Fig.6, the method further allows to bond two or more layers of substrate 3, 3a together. Fig. 6(a) shows the mould in the open state before transforming the substrates 3, 3a. Fig. 6(b) shows the mould in the open state after transforming the substrate to a substrate with dimensionally stable three-dimensional shape 3'. In order to obtain e.g. a diaphragm with a plurality of concentric corrugations and an central part, which is several times thicker than the corrugated diaphragm, a separate part 3a of substrate can be placed centrally on the sheet-like substrate 3, as indicated in Fig. 6(a), or placed in one of the two dies 1, 2. An example of such a diaphragm is described in Swiss patent application No. 00038/16.

The separate part 3a may be constituted as an absorption layer 5a or may be provided with an absorption layer 5a on either side. During irradiation of the absorption layer(s) 5, 5a the two substrate parts 3, 3a are heated above the glass transition temperature of the thermoplastic material and thereby permanently bonded together and a dimensionally stable three-dimensional shape is formed into the sheet-like substrate 3, as shown in Fig. 6(b).

It is understood that the present invention is not limited to the embodiments as discussed above. The person skilled in the art will be able to derive further variants within the scope of the claims with knowledge of the invention which also belong to the subject matter of the present invention.

### Reference Signs

- 1: first die
- 11: first template surface
- 2: second die
- 21: second template surface
- 3: sheet-like substrate
- 3a: part of sheet-like substrate
- 3': transformed sheet-like substrate
- 31: upper surface
- 32: lower surface
- 4, 4': electromagnetic irradiation
- 5, 5': absorption layer
- 5a: absorption layer
- 6: diaphragm
- 61: concentric corrugations
- 62: radial ribs

## Claims

1. A method for forming a dimensionally stable three-dimensional shape into a sheet-like substrate (3) of thermoplastic material comprising the steps of:
a. providing a mould including a first die (1) with a first template surface (11) for contacting an upper surface (31) of the substrate (3) and a second die (2) with a second template surface (21) for contacting a lower surface (32) of the substrate (3) opposite the upper surface (31) of the substrate (3); each template surface (11, 21) having an inverse of a desired shape to be transformed to the upper and lower surfaces (31, 32) of the substrate (3); and at least one of the first die (1) and the second die (2) being transparent to electromagnetic waves of a predetermined wavelength;
b. providing at least one absorption layer (5, 5') being able to be heated by absorption of an electromagnetic irradiation (4, 4') of the predetermined wavelength and thereby heating the thermoplastic substrate (3) to or above its glass transition temperature;
c. placing the substrate (3) between the first and the second die (1, 2) of the mould and closing the mould;
d. irradiating the absorption layer (5, 5') with the electromagnetic irradiation (4, 4') in order to heat the thermoplastic substrate (3) to or above its glass transition temperature during a sufficient time to transform the thermoplastic substrate into the three-dimensional shape.

2. Method according to claim 1, wherein at least one of the first template surface (11) and the second template surface (21) is provided with the absorption layer (5, 5').

3. Method according to one of the preceding claims, wherein the sheet-like substrate (3, 3a) is provided with the absorption layer (5, 5a).

4. Method according to one of the preceding claims, wherein the sheet-like substrate (3) comprises a material suitable to absorb the electromagnetic irradiation (4, 4') of predetermined wavelength and forms the absorption layer (5, 5a) in order to be heated to or above its glass transition temperature.

5. Method according to one of the preceding claims, wherein the sheet-like substrate comprises at least two parts (3, 3a), preferably two layers.

6. Method according to claim 6, wherein the at least two parts (3, 3a) are melted together during the step d.

7. Method according to one of the preceding claims, wherein the absorption layer (5, 5', 5a) is provided only to regions where the sheet-like substrate is to be melted.

8. Method according to one of the preceding claims, wherein the surface of the sheet-like substrate (3) is provided with a hydrophobic coating prior to step c.

9. A device for forming a dimensionally stable three-dimensional shape into a sheet-like substrate (3) of thermoplastic material, the device comprising:
- a mould including a first die (1) with a first template surface (11) for contacting an upper surface (31) of the substrate (3) and a second die (2) with a second template surface (21) for contacting a lower surface (32) of the substrate (3) opposite the upper surface (31) of the substrate (3); each template surface (11, 21) having an inverse of a desired shape to be transformed to the upper and lower surfaces (31, 32) of the substrate (3); and at least one of the first die (1) and the second die (2) being transparent to electromagnetic waves (4, 4') of a predetermined wavelength;
- a source of electromagnetic irradiation of the predetermined wavelength in order to heat an absorption layer (5, 5') arranged between the first template surface (11) and the second template surface (21).

10. Device according to claim 9, wherein at least one of the first template surface (11) and the second template surface (21) is provided with the absorption layer (5, 5').

11. Device according to claim 9 or 10, wherein the absorption layer (5, 5') is a metallic layer, a graphite layer or a layer of heat absorbing paint.

## Patentansprüche

1. Verfahren zum Formen einer formstabilen dreidimensionalen Struktur in ein flächenförmiges Substrat (3) aus thermoplastischem Material umfassend die Schritte:
a. Bereitstellen eines Formwerkzeugs, umfassend eine erste Matrize (1) mit einer ersten Template-Oberfläche (11) zur Kontaktierung der oberen Oberfläche (31) des Substrats (3) und einer zweiten Matrize (2) mit einer zweiten Template-Oberfläche (21) zur Kontaktierung der unteren Oberfläche (32) des Substrats (3), die der oberen Oberfläche (31) des Substrats (3) gegenüberliegt; wobei jede derTemplate-Oberflächen (11, 21) eine Umkehrung der gewünschten Form, die in die obere und untere Oberfläche (31, 32) des Substrats (3) zu formen ist, aufweist; und mindestens eine der ersten Matrizen (1) und der zweiten Matrizen (2) transparent für elektromagnetische Wellen einer vorbestimmten Wellenlänge ist;
b. Bereitstellen von mindestens einer Absorptionsschicht (5, 5'), die sich durch Absorption einer elektromagnetischen Strahlung (4, 4') vorgegebener Wellenlänge erwärmen lässt und dabei das thermoplastische Substrat (3) auf dessen Glasübergangstemperatur oder höher aufheizt;
c. Platzieren des Substrats (3) zwischen der ersten und zweiten Matrize (1, 2) des Formwerkzeugs und Schließen des Formwerkzeugs;
d. Bestrahlen der Absorptionsschicht (5, 5') mit der elektromagnetischen Strahlung (4, 4') zum Erwärmen des thermoplastischen Substrats (3) auf dessen Glasübergangstemperatur oder höher über eine hinreichende Zeit, um das thermoplastische Substrat in die dreidimensionale Struktur umzuformen.

2. Verfahren nach Anspruch 1, wobei mindestens eine der ersten Template-Oberflächen (11) und der zweiten Template-Oberflächen (21) über die Absorptionsschicht (5, 5') verfügt.

3. Verfahren einem der vorangegangenen Ansprüche, wobei das flächenförmige Substrat (3, 3a) über die Absorptionsschicht (5, 5a) verfügt.

4. Verfahren nach einem der vorangegangenen Ansprüche, wobei das flächenförmige Substrat (3) ein Material umfasst, das geeignet ist, um die elektromagnetische Strahlung (4, 4') vorbestimmter Wellenlänge zu absorbieren und die Absorptionsschicht (5, 5a) bildet, um auf dessen Glasübergangstemperatur oder höher aufgeheizt zu werden.

5. Verfahren nach einem der vorangegangenen Ansprüche, wobei das flächenförmige Substrat mindestens zwei Teile (3, 3a) umfasst, vorzugsweise zwei Schichten.

6. Verfahren nach Anspruch 6, wobei die mindestens zwei Teile (3, 3a) während Schritt d zusammenverschmolzen werden.

7. Verfahren nach einem der vorangegangenen Ansprüche, wobei die Absorptionsschicht (5, 5', 5a) nur an Stellen bereitgestellt ist, an denen das flächenförmige Substrat zu verschmelzen ist.

8. Verfahren einem der vorangegangenen Ansprüche, wobei die Oberfläche des flächenförmigen Substrats (3) vor Schritt c über eine hydrophobe Beschichtung verfügt.

9. Vorrichtung zum Formen einer formstabilen dreidimensionalen Struktur in ein flächenförmiges Substrat (3) aus thermoplastischem Material, die Vorrichtung umfassend:
- ein Formwerkzeug, umfassend eine erste Matrize (1) mit einer ersten Template-Oberfläche (11) zur Kontaktierung der oberen Oberfläche (31) des Substrats (3) und eine zweite Matrize (2) mit einer zweiten Template-Oberfläche (21) zur Kontaktierung der unteren Oberfläche (32) des Substrats (3), die der oberen Oberfläche (31) des Substrats (3) gegenüberliegt; wobei jede der Template-Oberflächen (11, 21) eine Umkehrung der gewünschten Form, die in die obere und untere Oberfläche (31, 32) des Substrats (3) zu formen ist, aufweist; und wobei mindestens eine der ersten Matrizen (1) und der zweiten Matrizen (2) transparent für elektromagnetische Wellen (4, 4') einer vorbestimmten Wellenlänge ist;
- eine Quelle elektromagnetischer Strahlung der vorbestimmten Wellenlänge zur Erwärmung einer Absorptionsschicht (5, 5'), die zwischen der ersten Template-Oberfläche (11) und der zweiten Template-Oberfläche (21) angeordnet ist.

10. Vorrichtung nach Anspruch 9, wobei mindestens eine der ersten Template-Oberflächen (11) und der zweiten Template-Oberflächen (21) über die Absorptionsschicht (5, 5') verfügt.

11. Vorrichtung nach Anspruch 9 oder 10, wobei die Absorptionsschicht (5, 5') eine Metallschicht, eine Graphitschicht oder eine Schicht aus wärmeaufnehmendem Lack ist.

## Revendications

1. Procédé de formation d'une forme tri-dimensionnelle dimensionnellememt stable en un substrat de type feuille (3) de matériau thermoplastique comprenant les étapes consistant à :
a. fournir un moule comprenant un premier moule (1) avec une première surface de matrice (11) pour contacter une surface supérieure (31) du substrat (3) et un second moule (2) avec une seconde surface de matrice (21) pour contacter une surface inférieure (32) du substrat (3) opposée à la surface supérieure (31) du substrat (3) ; chaque surface de matrice (11, 21) ayant un inverse d'une forme souhaitée à transformer aux surfaces supérieure et inférieure (31, 32) du substrat (3) ; et au moins un du premier moule (1) et du second moule (2) étant transparent aux ondes électromagnétiques d'une longueur d'onde prédéterminée ;
b. fournir au moins une couche d'absorption (5, 5') qui est capable d'être chauffée par absorption d'un rayonnement électromagnétique (4, 4') de la longueur d'onde prédéterminée et ainsi chauffer le substrat thermoplastique (3) à ou au-dessus de sa température de transition vitreuse ;
c. placer le substrat (3) entre le premier et le second moule (1, 2) du moule et fermer le moule ;
d. irradier la couche d'absorption (5, 5') avec le rayonnement électromagnétique (4, 4') pour chauffer le substrat thermoplastique (3) à ou au-dessus de sa température de transition vitreuse durant un temps suffisant pour transformer le substrat thermoplastique en la forme tri-dimensionnelle.

2. Procédé selon la revendication 1, dans lequel au moins une de la première surface de matrice (11) et de la seconde surface de matrice (21) est fournie avec la couche d'absorption (5, 5').

3. Procédé selon l'une quelconque des revendications précédentes, dans lequel le substrat de type feuille (3, 3a) est fourni avec la couche d'absorption (5, 5a).

4. Procédé selon l'une quelconque des revendications précédentes, dans lequel le substrat de type feuille (3) comprend un matériau approprié pour absorber le rayonnement électromagnétique (4, 4') de longueur d'onde prédéterminée et forme la couche d'absorption (5, 5a) pour être chauffée à ou au-dessus de sa température de transition vitreuse.

5. Procédé selon l'une quelconque des revendications précédentes, dans lequel le substrat de type feuille comprend au moins deux parties (3, 3a), de préférence deux couches.

6. Procédé selon la revendication 6, dans lequel les au moins deux parties (3, 3a) sont fusionnées ensemble durant l'étape d.

7. Procédé selon l'une quelconque des revendications précédentes, dans lequel la couche d'absorption (5, 5', 5a) est fournie seulement aux régions où le substrat de type feuille doit être fondu.

8. Procédé selon l'une quelconque des revendications précédentes, dans lequel la surface du substrat de type feuille (3) est fournie avec un revêtement hydrophobe avant l'étape c.

9. Dispositif pour former une forme tri-dimensionnelle dimensionnellement stable en un substrat de type feuille (3) de matériau thermoplastique, le dispositif comprenant :
- un moule comprenant un premier moule (1) avec une première surface de matrice (11) pour contacter une surface supérieure (31) du substrat (3) et un second moule (2) avec une surface de matrice (21) pour contacter une surface inférieure (32) du substrat (3) opposée à la surface supérieure (31) du substrat (3) ; chaque surface de matrice (11, 21) ayant un inverse d'une forme souhaitée à transformer aux surfaces supérieure et inférieure (31, 32) du substrat (3) ; et au moins un du premier moule (1) et du second moule (2) étant transparent aux ondes électromagnétiques (4, 4') d'une longueur d'onde prédéterminée ;
- une source de rayonnement électromagnétique de la longueur d'onde prédéterminée pour chauffer une couche d'absorption (5, 5') disposée entre la première surface de matrice (11) et la seconde surface de matrice (21).

10. Dispositif selon la revendication 9, dans lequel au moins une de la première surface de matrice (11) et de la seconde surface de matrice (21) est fournie avec la couche d'absorption (5, 5').

11. Dispositif selon la revendication 9 ou 10, dans lequel la couche d'absorption (5, 5') est une couche métallique, une couche de graphite ou une couche de peinture absorbant la chaleur.
